(19) Europäisches Patentamt / European Patent Office / Office européen des brevets

(11) **EP 2 306 358 B1**

(12) **FASCICULE DE BREVET EUROPEEN**

(45) Date de publication et mention de la délivrance du brevet:
**12.04.2017 Bulletin 2017/15**

(21) Numéro de dépôt: **10176630.1**

(22) Date de dépôt: **14.09.2010**

(51) Int Cl.:
*H04L 29/06* (2006.01)        *G07F 17/24* (2006.01)
*G07B 15/02* (2011.01)        *G06F 21/62* (2013.01)
*G06Q 20/32* (2012.01)        *G06Q 20/04* (2012.01)
*G06Q 30/06* (2012.01)        *G06F 21/64* (2013.01)
*H04L 9/32* (2006.01)

(54) **Procédé de vérification de la validité d'un ticket électronique de stationnement**

Überprüfungsverfahren der Gültigkeit eines elektronischen Parkscheins

Method for verifying the validity of an electronic parking ticket

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **18.09.2009 FR 0956433**

(43) Date de publication de la demande:
**06.04.2011 Bulletin 2011/14**

(73) Titulaire: **Oberthur Technologies**
**92300 Levallois-Perret (FR)**

(72) Inventeur: **Dabosville, Guillaume**
**95240, Cormeilles en Parisis (FR)**

(74) Mandataire: **Delumeau, François Guy et al**
**Cabinet Beau de Loménie**
**158, rue de l'Université**
**75340 Paris Cedex 07 (FR)**

(56) Documents cités:
EP-A2- 1 069 539        WO-A1-02/48975
WO-A1-98/49654        US-A1- 2002 094 090
US-B1- 6 690 794

• MENEZES A ET AL: "Handbook of Applied Cryptography, Challenge-response identification (strong authentication), Challenge-response by public-key techniques", 1 janvier 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 403-405,397, XP002521321, ISBN: 978-0-8493-8523-0 * page 405, 2nd paragraph *

• DOMINIKUS S ET AL: "mCoupons: An Application for Near Field Communication (NFC)", ADVANCED INFORMATION NETWORKING AND APPLICATIONS WORKSHOPS, 2007, AINAW '07. 21ST INTERNATIONAL CONFERENCE ON, IEEE, PISCATAWAY, NJ, USA, 21 May 2007 (2007-05-21), pages 421-428, XP031334719, ISBN: 978-0-7695-2847-2

• HASELSTEINER ET AL: "Security in Near Field Communication (NFC)", INTERNET CITATION, 12 July 2006 (2006-07-12), pages 1-19, XP002662376, Retrieved from the Internet: URL:http://bit.ly/ihUZcq [retrieved on 2011-10-28]

## Description

La présente invention se situe dans le domaine de la dématérialisation des tickets de stationnement.

Les documents WO 2004/055736 et WO 02/48975 décrivent des systèmes pour gérer des places de stationnement dans lequel les titres de stationnement sont constitués par des titres de stationnement électroniques délivrés par un horodateur moyennant paiement.

Plus précisément, ces titres de stationnement sont des transpondeurs capables de communiquer sans contact avec un lecteur utilisé par un agent de contrôle pour vérifier la validité du titre.

La Demanderesse s'est aperçue que ce système, bien que particulièrement avantageux, ne permettait pas de se prémunir contre les attaques connues de l'homme du métier de la cryptographie sous le nom d'« attaque de l'homme du milieu (HDM) » ou « man in the middle attack (MITM) » en anglais.

En effet, si un transpondeur pirate parvient, dans le mécanisme du document WO 2004/055736 a récupérer frauduleusement les données de stationnement mémorisées dans un autre transpondeur, et à fournir ces données au contrôleur qui l'interroge, l'agent de contrôle ne sera pas en mesure de détecter la fraude, les données qui lui sont présentées étant tout à fait valides.

Les documents US 6 690 794 et EP 1 069 538 décrivent des mécanismes de sécurisation de tickets électroniques.

Objet et résumé de l'invention

L'invention vise un procédé de vérification de la validité d'un titre de stationnement qui ne présente pas les inconvénients de ceux de l'art antérieur.

Plus précisément, et selon un premier aspect, l'invention concerne un procédé de vérification de la validité d'un ticket électronique de stationnement, conforme à la revendication 1.

D'une façon générale, une étape d'obtention sécurisée est une étape qui permet de garantir l'origine et l'intégrité de la donnée obtenue, par exemple par des moyens de signature cryptographique.

Ainsi, et de façon remarquable, l'agent de contrôle obtient, lorsqu'il vérifie un ticket électronique, en plus des données de stationnement, une donnée propre au véhicule dans lequel se trouve cette entité.

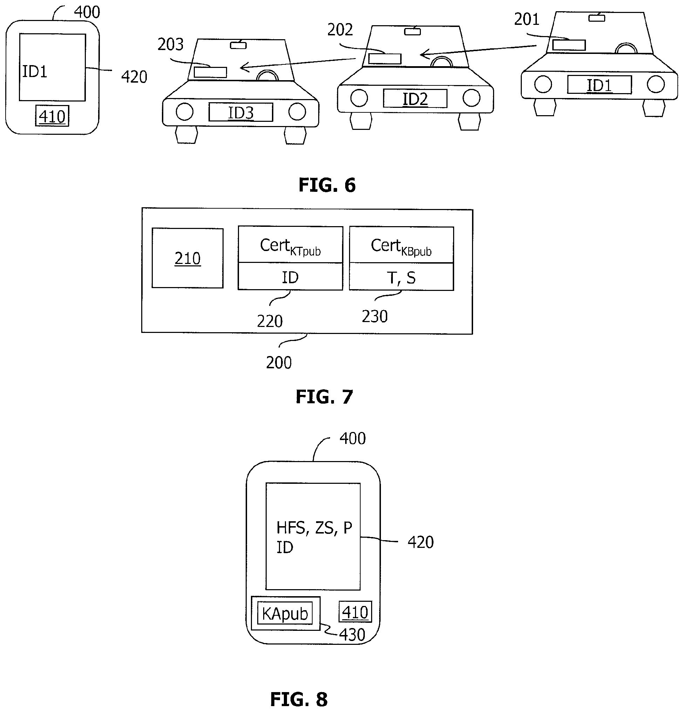

Le contrôle de cette donnée supplémentaire par l'agent de contrôle lui permet de détecter une attaque de type « man in the middle », comme cela sera décrit précisément dans un exemple en référence à la figure 6.

Conformément à l'invention, l'obtention de la donnée propre au véhicule comporte une étape de réception et de vérification d'un certificat numérique de l'entité électronique, ce certificat étant obtenu à partir de la donnée propre précitée et d'une clef publique de cette entité électronique.

Dans un mode préféré de réalisation de l'invention, ce contrôle consiste à comparer cette donnée propre avec une caractéristique visible du véhicule.

Cette caractéristique peut être constituée par un numéro gravé sur un élément du véhicule, par exemple sur le pare brise. Il peut aussi s'agir du numéro d'immatriculation du véhicule. Il peut s'agir de la marque, du modèle ou de la couleur du véhicule, ainsi que d'une combinaison d'au moins un de ces éléments avec le numéro d'immatriculation du véhicule.

Dans un mode particulier de réalisation, le procédé de vérification selon l'invention comporte en outre une étape d'obtention sécurisée d'au moins une donnée de liaison entre le ticket et la donnée propre précitée.

Dans un mode particulier de réalisation de l'invention, l'étape de restitution de la (partie de) donnée propre est une étape d'affichage de ladite donnée propre sur un écran du dispositif de contrôle.

Selon un autre aspect, l'invention vise aussi un dispositif de contrôle conforme à la revendication 8.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un ticket électronique T pouvant être utilisé dans l'invention ;
- les figures 2A à 2C représentent le principe d'une procédure d'achat de ticket électronique et de mémorisation de ce ticket dans une entité électronique ;
- la figure 3 représente sous forme d'organigramme un mécanisme de couplage pouvant être utilisé dans le contexte de l'invention ;
- la figure 4 représente sous forme d'organigramme un mécanisme sécurisé d'achat d'un ticket électronique et de mémorisation de ce ticket dans une entité électronique conforme à l'invention ;

- la figure 5 représente sous forme d'organigramme un procédé de vérification de validité d'un ticket électronique conforme à l'invention ;
- la figure 6 illustre la détection d'une attaque malveillante de type « man in the middle » par l'invention ;
- la figure 7 représente de façon schématique une entité électronique conforme à l'invention ; et
- la figure 8 représente de façon schématique un dispositif de contrôle conforme à l'invention.

Description d'un premier mode de réalisation

Nous allons maintenant décrire comment l'invention permet de vérifier la validité d'un ticket électronique T de stationnement.

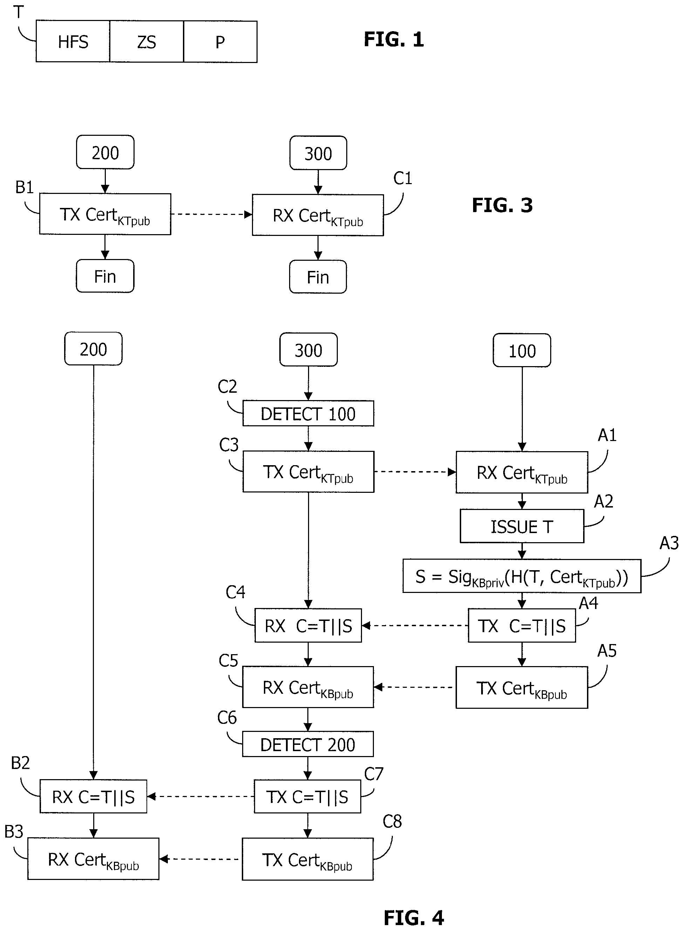

La figure 1 représente un exemple de ticket T pouvant être utilisé dans l'invention.

Dans cet exemple, le ticket électronique T comporte des données de stationnement à savoir :

- une heure de fin de stationnement HFS ;
- une zone de stationnement ZS ; et
- un prix payé P.

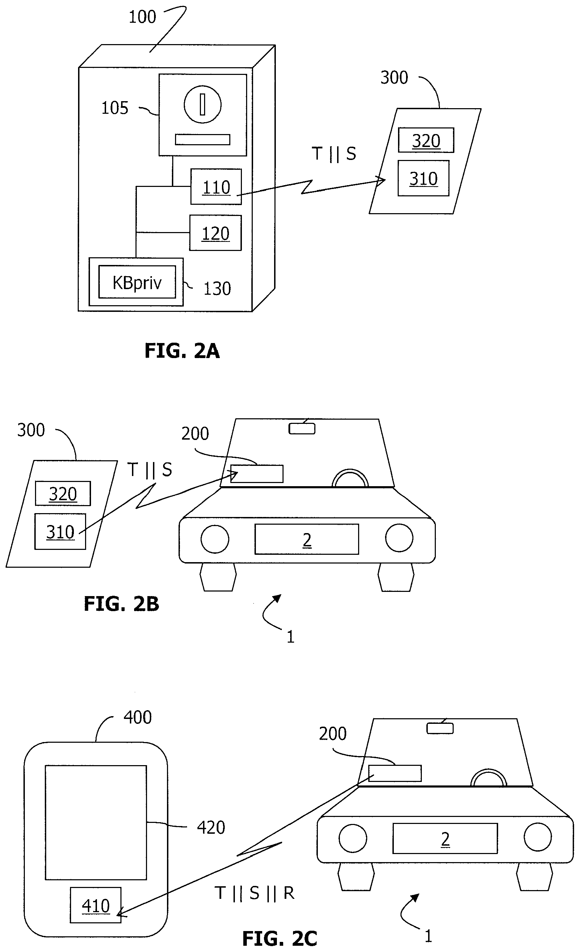

Dans l'exemple de réalisation décrit ici, et comme représenté aux figures 2A à 2C, le ticket électronique T est émis par un horodateur 100.

Cet horodateur 100 comporte des moyens de paiement 105 par lesquels un utilisateur peut introduire de la monnaie ou une carte de crédit afin d'acquitter le prix P.

Dans l'exemple de réalisation décrit ici, le ticket électronique T est émis par l'horodateur 100 avec des moyens de communication sans fil 110 et reçus par des moyens de communication sans fil 310 correspondant d'un téléphone mobile 300 de l'utilisateur.

Les moyens de communication sans fil 110, 310 sont par exemple conformes à la norme Bluetooth, à la norme Wifi ou au standard NFC (Near Field Communication).

Lorsque l'utilisateur approche son téléphone mobile 300 de son véhicule 1, le ticket électronique T est transféré de la mémoire du téléphone mobile 300 vers un boitier 200 (ou transpondeur) comportant des moyens de communications sans fil 210 correspondant aux moyens de communication sans fil 310 du téléphone mobile 300.

Le ticket électronique T peut ultérieurement être vérifié par un agent de contrôle (personne physique) muni d'un dispositif de contrôle 400 par exemple un PDA comportant des moyens de communication sans fil 410 aptes à télécharger le ticket électronique T du transpondeur 200.

Nous allons maintenant décrire comment ces mécanismes d'émission et de vérification de ticket électronique sont sécurisés.

Dans le mode de réalisation décrit ici, le transpondeur 200 dispose d'une clé publique certifiée $Cert_{KTpub}$, ce certificat numérique permettant d'associer la clé publique KTpub du transpondeur 200 avec un identifiant ID propre au véhicule 1 dans lequel est installé le transpondeur.

Plus précisément, dans l'exemple de réalisation décrit ici, le certificat $Cert_{KTpub}$ est obtenu par la formule suivante :

$$Cert_{KTpub} = ID \;||\; KTpub \;||\; Sig_{KApriv}(H(ID, KTpub)),$$

dans laquelle :

- H est une fonction de hâchage ; et
- $Sig_{KApriv}$ une fonction de signature avec la clé privée d'un organisme de certification.

Dans l'exemple de réalisation décrit ici le certificat $Cert_{KTpub}$ du transpondeur 200 est importé par couplage dans la mémoire du téléphone mobile 300.

Ce mécanisme est décrit sous forme d'organigramme à la figure 3 dans lequel l'étape B1 est une étape d'envoi de ce certificat par le transpondeur 200 et l'étape C1 une étape de réception de ce certificat par le téléphone mobile 300, le transpondeur 200 et le téléphone mobile 300 communiquant pour cet échange par leurs moyens de communication sans fil 210, 310.

La sécurisation de ce mécanisme ne fait pas partie du champ de l'invention. Dans un mode de réalisation de l'invention, la communication entre le transpondeur 200 et le téléphone mobile 300 peut être sécurisée par des moyens cryptographiques connus de l'homme du métier.

Dans un mode préféré de réalisation de l'invention, le certificat $Cert_{KTpub}$ est mémorisé dans une carte SIM du téléphone mobile 300. La connaissance du certificat $Cert_{KTpub}$ du transpondeur 200 permet au téléphone mobile de :

- vérifier l'identité du transpondeur par un jeu de défi/réponse en utilisant la clef KTpub incorporée dans $Cert_{KTpub}$ ;
- présenter ce certificat à un horodateur pour que celui-ci puisse lier un ticket électronique avec ce certificat par exemple grâce à une opération de signature et de hachage avant de l'envoyer à destination du transpondeur.

En effet, une fois ce couplage réalisé, l'utilisateur pourra se présenter directement à l'horodateur 100 pour acheter un ticket électronique T sans être obligé d'interagir avec le transpondeur 200 avant chaque transaction.

En référence à la figure 4, nous allons maintenant décrire comment s'effectue l'achat d'un ticket électronique T par un utilisateur.

Nous supposerons que l'utilisateur d'un véhicule 1 en stationnement approche son téléphone mobile 300 d'un horodateur 100.

Au cours d'une étape C2, les moyens de communication sans fil 310 du téléphone mobile 300 détectent la présence des moyens de communication sans fil 110 de l'horodateur 100 dès lors qu'ils s'en trouvent à proximité.

Le téléphone mobile 300 envoie ensuite, au cours d'une étape C3, le certificat $Cert_{KTpub}$ du transpondeur 200 à l'horodateur 100, ce certificat ayant été mémorisé dans la mémoire du téléphone mobile 300 par couplage comme décrit précédemment à la figure 3.

Le certificat $Cert_{KTpub}$ est reçu par l'horodateur 100 au cours d'une étape A1.

Nous supposerons ensuite que l'utilisateur introduit de la monnaie dans le monnayeur 105 de l'horodateur 100 pour acheter un ticket électronique T, ce ticket électronique T étant émis par l'horodateur 100 au cours d'une étape A2.

Dans l'exemple de réalisation décrit ici, l'horodateur 100 comporte des moyens cryptographiques 120, par exemple de chiffrement, pour calculer la signature S du ticket électronique T en y incorporant le certificat numérique $Cert_{KTpub}$ présenté par le mobile 300 au cours d'une étape A3. La signature S peut par exemple être calculée selon la formule suivante :

$$S = Sig_{KBpriv}(H(T, Cert_{KTpub})),$$

dans laquelle $Sig_{KBpriv}$ est une fonction de signature avec la clé privée KBpriv de l'horodateur 100.

L'horodateur 100 émet ensuite, au cours d'une étape A4, par ses moyens de communication sans fil 110, une donnée C comportant le ticket électronique T et la signature S, cette donnée C étant reçue par les moyens de communication sans fil 310 du téléphone mobile 300 au cours d'une étape C4.

Dans l'exemple de réalisation décrit ici, l'horodateur envoie également, au cours d'une étape A5, son certificat $Cert_{KBpub}$, ce certificat étant reçu par le téléphone mobile 300 au cours d'une étape C5.

L'envoi du certificat $Cert_{KBpub}$ de l'horodateur 100 au téléphone mobile 300 n'est pas nécessaire lorsque ce certificat est connu des dispositifs de contrôle 400 utilisés pour vérifier la validité des tickets électroniques T émis par cet horodateur.

A l'issue des étapes C2 à C5, le ticket électronique T et sa signature S sont mémorisés dans le téléphone mobile 300.

Nous supposerons que l'utilisateur approche son téléphone mobile 300 du transpondeur 200 installé dans son véhicule 1 et que les moyens de communication sans fil 310 du téléphone mobile 300 détectent les moyens de communication sans fil 210 du transpondeur 200 au cours d'une étape C6.

Au cours d'une étape C7, le téléphone mobile 300 envoie la donnée C comportant le ticket électronique T et sa signature S au transpondeur 200, cette donnée C étant reçue par le transpondeur 200 au cours d'une étape B2.

Si le téléphone mobile 300 a reçu (étape C5) le certificat $Cert_{KBpub}$ de l'horodateur 100, il le transmet également au transpondeur 200 lors d'une étape C8, ce certification étant reçu par le transpondeur au cours d'une étape B3.

Dans ce mode de réalisation, le téléphone mobile 300 constitue en quelque sorte un canal de communication entre le transpondeur 200 et l'horodateur 100.

Dans ce mode de réalisation, la donnée C peut être dupliquée. Néanmoins, lors d'un contrôle, seul le transpondeur disposant de la clé privée KTpriv associée au certificat $Cert_{KTpub}$ sera en mesure de prouver que le ticket électronique lui appartient par un jeu de défi/réponse.

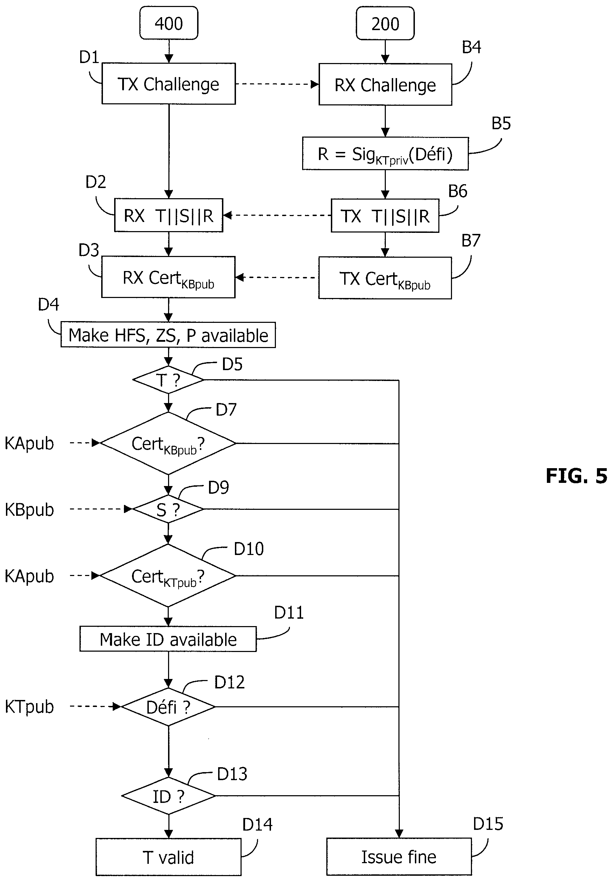

En référence à la figure 5, nous allons maintenant décrire un procédé de vérification de la validité du ticket électronique T conforme à l'invention.

Nous supposerons que cette vérification est effectuée par un agent de contrôle (personne physique) munie d'un dispositif de contrôle 400 comportant des moyens de communication sans fil 410 compatibles avec les moyens de communication sans fil 210 du transpondeur 200.

Dans le mode de réalisation décrit ici, les moyens 410 de communication sans fil du dispositif de contrôle 400 et les moyens 210 de communication sans fil du transpondeur 200 sont conformes au standard NFC ; ils peuvent être sécurisés.

Ces moyens de communication sans fil sont préférentiellement de très courte portée. Ils peuvent notamment être de portée inférieure à 60 cm, par exemple inférieure à 30 cm, voire de l'ordre de 10 à 15 cm.

Une telle très courte portée comporte plusieurs avantages, notamment :

- une consommation réduite du dispositif de contrôle 400 et du transpondeur 200 ;
- une sécurité renforcée dans la mesure où la communication impose que l'agent de contrôle approche son dispositif de contrôle du transpondeur 200 au plus près, évitant ainsi tout risque d'attaque du type « man in the middle ».

On notera qu'une une solution de communication de plus grande portée (par exemple quelques dizaines de mètres), de type Bluetooth ou Wifi, est plus complexe que la solution selon l'invention car elle nécessite la mise en oeuvre de moyens supplémentaires pouvoir distinguer différents transpondeurs, par exemple un protocole ou des identifiants particuliers.

Dans l'exemple de réalisation décrit ici, ce dispositif de contrôle 400 est constitué par un assistant personnel (PDA).

Nous supposons maintenant que l'agent de contrôle approche son PDA 400 du transpondeur 200 suffisamment près pour qu'une communication puisse s'établir entre les moyens de communication sans fil 410 du PDA 400 et les moyens de communication sans fil du transpondeur 200.

Dans l'exemple de réalisation décrit ici, le PDA 400 envoie, au cours d'une étape D1, un défi (en anglais challenge) au transpondeur 200, celui-ci recevant le défi au cours d'une étape B4.

Au cours d'une étape B5, le transpondeur 200 calcule une signature R de ce défi en utilisant sa clé privée KTpriv.

Puis, au cours d'une étape B6, le transpondeur 200 envoie au dispositif de contrôle 400, le ticket électronique T, la signature S de ce ticket et la signature R du défi, ces données T, S, R étant reçues par le dispositif de contrôle 400 au cours d'une étape D2.

Si le transpondeur 200 a reçu le certificat $Cert_{KBpub}$ de l'horodateur 100 (voir étape B3) alors le transpondeur 200 envoie ce certificat au PDA 400 au cours d'une étape B7, le PDA recevant ce certificat lors d'une étape D3.

Au cours d'une étape D4, le PDA affiche sur son écran 420 les données de stationnement HFS, ZS, P comprises dans le ticket électronique T.

Au cours d'un test D5, l'agent de contrôle vérifie sur la base de ces données si le stationnement du véhicule 1 est autorisé ou non.

Si tel n'est pas le cas, le résultat du test D5 est négatif et ce test est suivi par une étape D15 au cours de laquelle l'agent de contrôle peut établir une amende au propriétaire du véhicule 1.

Si le résultat du test D5 est positif, dans l'exemple de réalisation décrit ici, le PDA 400 vérifie au cours d'un test D7, la validité du certificat $Cert_{KBpub}$ de l'horodateur 100 à l'aide de la clé publique KApub associée à la clé privée KApriv de l'autorité de confiance ayant émis ce certificat.

Si la vérification du certificat échoue, le résultat du test D7 est négatif et ce test est suivi par l'étape D15 déjà décrite au cours de laquelle l'agent de contrôle établit une amende au propriétaire du véhicule 1.

Si le certificat $Cert_{KBpub}$ de l'horodateur 100 est validé, le résultat du test D7 est positif. Ce test est suivi par un test D9 au cours duquel le PDA 400 vérifie la validité de la signature S du ticket électronique T en utilisant la clef publique KBpub de l'horodateur 100.

Si ce test échoue, le résultat du test D9 est négatif et ce test est suivi par l'étape D15 déjà décrite.

Au contraire, si la signature S est validée, le résultat du test D9 est positif.

Au cours de cette étape, le PDA 400 récupère le certificat $Cert_{KTpub}$ du transpondeur 200 avant de vérifier l'intégrité du ticket électronique T.

Le test D9 est suivi par un test D10 au cours duquel le PDA 400 vérifie la validité du certificat $Cert_{KTpub}$ en utilisant la clé publique KApub de l'autorité de confiance.

Si le résultat du test D10 est négatif, il est suivi par l'étape D15 déjà décrite.

Au contraire, si le certificat $Cert_{KTpub}$ est validé, le résultat du test D10 est positif. Ce test D10 permet au PDA 400 de récupérer la clé publique KTpub du transpondeur 200 et l'identifiant propre ID du véhicule 1 dans lequel il est installé.

Dans le mode de réalisation décrit ici, l'identifiant ID est affiché sur l'écran 420 du PDA 400 au cours d'une étape D11. En variante, seule une partie de l'identifiant ID est restituée par le PDA 400.

Dans un autre mode de réalisation, l'étape de restitution D10 précède le test D9.

Dans le mode de réalisation décrit ici, l"étape de restitution D10 est suivie par un test D12 de vérification du défi, en utilisant la clef publique KTpub.

L'agent de contrôle vérifie, au cours d'une étape D13, la validité de l'identifiant ID en le comparant avec une marque visuelle apparente sur le le véhicule 1.

Par exemple, cet identifiant peut être gravé sur le pare-brise du véhicule. Cet identifiant peut aussi être constitué par le numéro d'immatriculation du véhicule 1.

Quoiqu'il en soit, il est important que cette marque visuelle soit infalsifiable ou pour le moins, difficilement falsifiable.

Cette vérification consistant à comparer l'identifiant ID reçu du transpondeur avec la marque visuelle apparente sur le véhicule 1 permet de détecter une attaque malveillante connue par l'homme de métier sous le nom d'attaque de type « man in the middle ».

Plus précisément, dans le contexte de l'invention, une attaque « man in the middle » serait une attaque dans laquelle un transpondeur 203 interrogé par le dispositif de contrôle 400, fournirait à ce dernier, non pas un ticket de stationnement acquis comme il se doit par l'utilisateur propriétaire de ce transpondeur 203 mais des données valides obtenues frauduleusement par le transpondeur 203 de proche en proche à partir d'un autre transpondeur 201, comme représenté à la figure 6.

L'homme du métier comprendra que dans ce cas l'identifiant s'affichant sur l'écran 420 du PDA 400 serait une donnée propre ID1 au véhicule 1 dans lequel cet autre transpondeur 201 est installé, ce qui pourrait être très facilement détecté par l'agent de contrôle.

Il est important de noter que, dans ce mode de réalisation, la signature S obtenue à l'étape A3 permet de lier le ticket électronique T et la donnée propre ID. Elle permet d'éviter une fraude dans laquelle un transpondeur pirate 200 obtiendrait le ticket électronique T et la donnée propre ID de proche en proche à partir de deux transpondeurs différents.

La figure 7 représente, de façon schématique, une entité électronique 200 (ou transpondeur) conforme à l'invention.

Cette entité électronique comporte des moyens de communication sans fil 210 aptes à communiquer avec des moyens équivalents d'un téléphone portable et d'un dispositif de contrôle 400, par exemple des moyens de communication sans fil conformes à la norme bluetooth ou des moyens de communication par champ proche NFC.

Conformément à l'invention, l'entité électronique 200 mémorise un identifiant ID propre au véhicule dans lequel elle est installée.

Dans l'exemple de réalisation décrit ici, cette donnée propre ID est mémorisée dans une mémoire morte 220, cette mémoire comportant en outre le certificat $Cert_{KTpub}$ de cette entité.

Dans l'exemple de réalisation décrit ici, l'entité électronique 200 comporte en outre une mémoire 230 de type flash pour mémoriser au moins un ticket électronique T, la signature S de ce ticket par l'horodateur 100 et éventuellement le certificat $Cert_{KTpub}$ de cet horodateur. Ces données étant reçues par l'entité électronique 200 comme déjà décrit en référence aux étapes B2 et B3 de la figure 4.

La figure 8 représente un dispositif de contrôle 400 conforme à l'invention, celui-ci pouvant être utilisé par un agent de contrôle pour vérifier la validité d'un ticket de stationnement T mémorisé dans le transpondeur 200 tel que précédemment décrit en référence à la figure 7

Ce dispositif de contrôle 400 comporte notamment des moyens de communication sans fil 410 compatibles avec ceux du transpondeur 200 et des moyens pour restituer d'une part, les données de stationnement comprises dans un ticket électronique T et d'autre part l'identifiant propre au véhicule 1 dans lequel il est installé.

Ces moyens de restitution 420 peuvent par exemple être constitués par un écran.

Dans l'exemple de réalisation décrit ici, le dispositif de contrôle 400 comporte en outre une mémoire flash 430 dans laquelle il mémorise la clé publique KApub de l'autorité de confiance.

Description d'un deuxième mode de réalisation

Dans un deuxième mode de réalisation de l'invention, le transpondeur ne dispose pas de clef publique certifiée mais seulement d'un identifiant propre ID (à ce transpondeur ou au véhicule dans lequel le transpondeur est installé), cet identifiant propre ID étant transmis au téléphone mobile pendant le couplage (étapes B1, C1 de la figure 3).

Dans ce deuxième mode de réalisation, la signature S du ticket électronique T par le transpondeur est calculée (étape A3) selon la formule : $S = Sig_{KBpriv}(H(T, ID))$.

L'identifiant propre ID au véhicule est obtenu, dans ce deuxième mode de réalisation au cours du test D9 de vérification de la validité de la signature S et restitué sur le dispositif de contrôle 400 de l'agent de contrôle.

Comme dans le premier mode de réalisation, cette signature S constitue une donnée de liaison entre le ticket électronique T et l'identifiant propre ID.

Autres modes de réalisation

Dans les deux modes de réalisation décrits précédemment, le ticket électronique T et sa signature sont fournis au transpondeur 200 via le téléphone mobile 300 de l'utilisateur. L'invention s'étend aussi à tout autre mode d'obtention du ticket électronique T et de sa signature S par le transpondeur.

Dans les deux modes de réalisation décrits précédemment, on utilise une donnée de liaison entre le ticket électronique T et la donnée propre ID, cette donnée étant constituée par la signature S calculée à l'étape A3, selon la formule :

$$S = \text{Sig}_{KBpriv}(H(T, \text{Cert}_{KTpub})) \ ;$$

ou

$$S = \text{Sig}_{KBpriv}(H(T, ID)).$$

En variante, on peut par exemple, à l'étape A3, lier le ticket T et la donnée propre ID, en calculant deux signatures S1, S2 données avec :

$$S1 = \text{Sig}_{KBpriv}(H(T, VA)) \ ;$$

et

$$S2 = \text{Sig}_{KBpriv}(H(ID, VA)),$$

chacune de ces signatures utilisant une même valeur VA, par exemple choisie aléatoirement.

## Revendications

1. Procédé de vérification de la validité d'un ticket électronique (T) de stationnement, ledit ticket émis par un horodateur (100) comportant au moins une donnée de stationnement (HFS, ZS, P) et étant mémorisé dans une entité électronique (200) placée dans un véhicule (1), ce procédé pouvant être mis en oeuvre par un dispositif de contrôle (400) comportant:

   - une étape (D2) d'obtention sécurisée dudit ticket électronique (T) et d'une signature (S) du ticket électronique (T) à partir de ladite entité électronique (200), ledit ticket électronique (T) et ladite signature (S) du ticket électronique (T) étant reçus (D2) à partir de ladite entité électronique (200) par des moyens de communication sans fil (210) conformes au standard NFC, ladite signature (S) étant calculée (A3) par des moyens cryptographiques (120) dudit horodateur (100) en y incorporant ledit ticket électronique (T) et un certificat numérique (Cert$_{KTpub}$) associant une clé publique (KTpub) de l'entité électronique (200) avec ladite donnée propre (ID) ;
   - une étape (D4) de restitution de ladite au moins une donnée de stationnement ;
   - une étape (D9) de vérification de la validité de la signature (S)
   - une étape d'obtention du certificat (Cert$_{KTpub}$) à partir de l'entité électronique (200) ;
   - une étape (D10) d'obtention sécurisée d'une donnée (ID) propre audit véhicule (1) consistant à vérifier la validité dudit certificat (Cert$_{KTpub}$) et si il est valide à en extraire la donnée (ID) propre audit véhicule (1)
   - et une étape (D11) de restitution d'au moins une partie de ladite donnée propre (ID).

2. Procédé de vérification selon la revendication 1, **caractérisé en ce que** ladite signature S est obtenue par l'une des formules suivantes S = Sig$_{KBpriv}$(H(T, Cert$_{KTpub}$)) ou S = Sig$_{KBpriv}$(H(T, ID)) dans lesquelles :

   - Sig$_{KBpriv}$ est une fonction de signature avec une clé privée (KBpriv) dudit horodateur (100) ; et
   - H est une fonction de hachage.

3. Procédé de vérification selon la revendication 1 ou 2, **caractérisé en ce que** l'obtention de ladite donnée (ID) propre audit véhicule (1) comporte une étape (D2) de réception et de vérification (D10) d'un certificat numérique (Cert$_{KTpub}$) de ladite entité électronique, ce certificat étant obtenu à partir de ladite donnée propre (ID) et d'une clef publique (KTPub) de ladite entité électronique (200), seule ladite entité électronique disposant d'une clé privée (KTpriv) associée audit certificat numérique (CertKTpub), ladite étape de vérification permettant d'authentifier ladite entité électronique.

4. Procédé de vérification selon l'une quelconque des revendications 1 à 3, **caractérisé en ce qu'**il comporte en outre une étape (D13) de comparaison de ladite au moins une partie de donnée propre (ID) avec une caractéristique dudit véhicule.

5. Procédé de vérification selon l'une quelconque des revendications 1 à 4, **caractérisé en ce que** ladite étape (D11) de restitution de ladite au moins une partie de donnée propre est une étape d'affichage de ladite donnée propre sur un écran (420) dudit dispositif de contrôle (400).

6. Procédé de vérification selon la revendication 4 ou 5, **caractérisé en ce que** ladite caractéristique est une marque visuelle visible de l'extérieur dudit véhicule (1).

7. Procédé de vérification selon la revendication 6, **caractérisé en ce que** ladite caractéristique est un numéro gravé sur un élément dudit véhicule.

8. Dispositif de contrôle (400) pouvant être utilisé pour vérifier la validité d'un ticket de stationnement électronique émis par un horodateur (100) comportant au moins une donnée de stationnement (HFS, ZS, P) et étant mémorisé dans une entité électronique (200) placée dans un véhicule (1) et comportant :

   - des moyens de communication sans fil (410) conformes au standard NFC pour obtenir de façon sécurisée, à partir de ladite entité électronique (200), ledit ticket électronique (T), et une signature (S) du ticket électronique (T), ladite signature (S) étant calculée (A3) par des moyens cryptographiques (120) dudit horodateur (100) en y incorporant ledit ticket électronique (T) et un certificat numérique (Cert$_{KTpub}$) associant une clé publique (KTpub) de l'entité électronique (200) avec ladite donnée propre (ID)
   - des moyens de vérification de la validité de ladite signature (S)
   - des moyens d'obtention du certificat (Cert$_{KTpub}$) à partir de ladite entité électronique (200)
   - des moyens d'obtention sécurisée d'une donnée (ID) propre au véhicule (1) consistant à vérifier la validité dudit certificat (Cert$_{KTpub}$) et s'il est valide à en extraire la donnée (ID) propre audit véhicule (A) ; et
   - des moyens (420) pour restituer au moins une partie de ladite donnée propre (ID).

9. Dispositif de contrôle selon la revendication 9, **caractérisé en ce que** lesdits moyens de communication sans fil (410) sont de très courte portée, par exemple de portée inférieure à 60 cm, par exemple inférieure à 30 cm, voire de l'ordre de 10 à 15 cm.

**Patentansprüche**

1. Verfahren zur Überprüfung der Gültigkeit eines elektronischen Parktickets (T), wobei das Ticket, welches durch einen Parkscheinautomaten (100) ausgegeben wird, wenigstens eine Parkangabe (HFS, ZS, P) umfasst und in einer in einem Fahrzeug (1) angeordneten elektronischen Einheit (200) gespeichert ist, wobei dieses Verfahren, das durch eine Kontrollvorrichtung (400) durchgeführt werden kann, umfasst:

   - einen Schritt (D2) zum gesicherten Erhalten des elektronischen Tickets (T) und einer Signatur (S) des elektronischen Tickets (T) von der elektronischen Einheit (200), wobei das elektronische Ticket (T) und die Signatur (S) des elektronischen Tickets (T) von der elektronischen Einheit (200) über Drahtloskommunikationsmittel (210) gemäß NFC-Standard empfangen (D2) werden, wobei die Signatur (S) durch kryptografische Mittel (120) des Parkscheinautomaten (100) unter Einschließen des elektronischen Tickets (T) und eines digitalen Zertifikats (Cert$_{KTPub}$), welches der spezifischen Angabe (ID) einen öffentlichen Schlüssel (KTpub) der elektronischen Einheit (200) zuordnet, berechnet (A3) wird,
   - einen Schritt (D4) zum Wiederherstellen der wenigstens einen Parkangabe,
   - einen Schritt (D9) zum Überprüfen der Gültigkeit der Signatur (S),
   - einen Schritt zum Erhalten des Zertifikats (Cert$_{KTPub}$) von der elektronischen Einheit (200),
   - einen Schritt (D10) zum gesicherten Erhalten einer für das Fahrzeug (1) spezifischen Angabe (ID), der darin besteht, die Gültigkeit des Zertifikats (Cert$_{KTPub}$) zu überprüfen und, wenn es gültig ist, hieraus die für das Fahrzeug (1) spezifische Angabe (ID) zu extrahieren, und
   - einen Schritt (D11) zur Wiederherstellung wenigstens eines Teils der spezifischen Angabe (ID).

2. Überprüfungsverfahren nach Anspruch 1, **dadurch gekennzeichnet, dass** die Signatur S durch eine der folgenden Formeln, S = Sig$_{KBpriv}$(H(T, Cert$_{KTPub}$)) oder S = Sig$_{KBpriv}$(H(T, ID)), erhalten wird, bei denen:

   - Sig$_{KBpriv}$ eine Signatur-Funktion mit einem privaten Schlüssel (KBpriv) des Parkscheinautomaten (100) ist und
   - H eine Hash-Funktion ist.

3. Überprüfungsverfahren nach Anspruch 1 oder 2, **dadurch gekennzeichnet, dass** das Erhalten der für das Fahrzeug (1) spezifischen Angabe (ID) einen Schritt (D2) des Empfangens und Überprüfens (D10) eines digitalen Zertifikats (Cert$_{KTPub}$) der elektronischen Einheit umfasst, wobei dieses Zertifikat anhand der spezifischen Angabe (ID) und eines öffentlichen Schlüssels (KTPub) der elektronischen Einheit (200) erhalten wird, wobei nur die elektronische Einheit über einen privaten Schlüssel (KTpriv), welcher dem digitalen Zertifikat (Cert$_{KTPub}$) zugeordnet ist, verfügt, wobei der Überprüfungsschritt ermöglicht, die elektronische Einheit zu authentifizieren.

4. Überprüfungsverfahren nach einem der Ansprüche 1 bis 3, **dadurch gekennzeichnet, dass** es ferner einen Schritt (D13) zum Vergleichen des wenigstens einen Teils der spezifischen Angabe (ID) mit einem Merkmal des Fahrzeugs umfasst.

5. Überprüfungsverfahren nach einem der Ansprüche 1 bis 4, **dadurch gekennzeichnet, dass** der Schritt (D11) des Wiederherstellens des wenigstens einen Teils der spezifischen Angabe ein Schritt des Anzeigens der spezifischen Angabe auf einem Display (420) der Kontrollvorrichtung (400) ist.

6. Überprüfungsverfahren nach Anspruch 4 oder 5, **dadurch gekennzeichnet, dass** das Merkmal ein von außerhalb des Fahrzeugs (1) sichtbares visuelles Kennzeichen ist.

7. Überprüfungsverfahren nach Anspruch 6, **dadurch gekennzeichnet, dass** das Merkmal eine auf ein Element des Fahrzeugs gravierte Nummer ist.

8. Kontrollvorrichtung (400), die verwendet werden kann, um die Gültigkeit eines durch einen Parkscheinautomaten (100) ausgegebenen elektronischen Parktickets, das wenigstens eine Parkangabe (HFS, ZS, P) umfasst und in einer in einem Fahrzeug (1) angeordneten elektronischen Einheit (200) gespeichert ist, zu überprüfen, und die umfasst:

   - Drahtloskommunikationsmittel (410) gemäß NFC-Standard zum gesicherten Erhalten des elektronischen Tickets (T) und einer Signatur (S) des elektronischen Tickets (T) von der elektronischen Einheit (200), wobei die Signatur (S) durch kryptografische Mittel (120) des Parkscheinautomaten (100) unter Einschließen des elektronischen Tickets (T) und eines digitalen Zertifikats (Cert$_{KTPub}$), welches der spezifischen Angabe (ID) einen öffentlichen Schlüssel (KTpub) der elektronischen Einheit (200) zuordnet, berechnet (A3) wird,
   - Mittel zum Überprüfen der Gültigkeit der Signatur (S),
   - Mittel zum Erhalten des Zertifikats (Cert$_{KTPub}$) von der elektronischen Einheit (200),
   - Mittel zum gesicherten Erhalten einer für das Fahrzeug (1) spezifischen Angabe (ID), die darin bestehen, die Gültigkeit des Zertifikats (Cert$_{KTpub}$) zu überprüfen und, wenn es gültig ist, hieraus die für das Fahrzeug (1) spezifische Angabe (ID) zu extrahieren, und
   - Mittel (420) zur Wiederherstellung wenigstens eines Teils der spezifischen Angabe (ID).

9. Kontrollvorrichtung nach Anspruch 8, **dadurch gekennzeichnet, dass** die Drahtloskommunikationsmittel (410) eine sehr kurze Reichweite haben, beispielsweise eine Reichweite von weniger als 60 cm, beispielsweise von weniger als 30 cm, sogar in der Größenordnung von 10 bis 15 cm.

**Claims**

1. A method of verifying the validity of an electronic parking ticket (T), said ticket being issued by a ticket machine (100) and including parking data (HFS, ZS, P) and being stored in memory of an electronic entity (200) placed in a vehicle (1), the method being suitable for implementation by an inspection device (400), and comprising:

   a step (D2) of securely obtaining from said electronic entity (200) said electronic ticket (T) and a signature (S) of said electronic ticket (T), the electronic ticket (T) and the signature (S) of said electronic ticket (T) being received (D2) from said electronic entity (200) by wireless communication means (210) complying with the NFC standard, said signature (S) being calculated (A3) by cryptographic means (120) of said ticket machine (100) by incorporating therein said electronic ticket (T) and a digital certificate ($Cert_{KTpub}$) that associates a public key (KTpub) of said electronic entity (200) with said specific data (ID);

- a step (D4) of making available at least some of the parking data;
- a step (D9) of verifying the validity of the signature (S);
- a step of obtaining the certificate ($Cert_{KTpub}$) from said electronic entity (200);
- a step (D10) of securely obtaining specific data (ID) that is specific to said vehicle (1), this step consisting in verifying the validity of said certificate ($Cert_{KTpub}$) and if it is valid in extracting therefrom the data (ID) specific to said vehicle (1)
- and a step (D11) of making available at least a portion of said specific data.

2. A verification method according to claim 1, **characterized in that** said signature (S) is obtained by one of said formula $S=Sig_{KBpriv}(H(T, (Cert_{KTpub}))$ or $S=Sig_{KBPriv}(H(T,ID))$ in which:

- $Sig_{KBpriv}$ is a signature function with a private key (KBpriv) of said ticket machine (100); and
- H is a hashing function.

3. A verification method according to claim 1 or 2, **characterized in that** the step of obtaining the data (ID) specific to the vehicle (1) comprises a step (D2) of receiving and verifying (D10) a digital certificate ($Cert_{KTpub}$) of the electronic entity, this certificate being obtained using that specific data (ID) and a public key (KTPub) of the electronic entity (200), only said electronic entity having a private key (KTpriv) associated with said digital certificate (CertKTpub), said verifying step enabling to authenticate said electronic entity.

4. A verification method according to anyone of claims 1 to 3, **characterized in that** further includes a step (D13) of comparing said at least a portion of the specific data (ID) with a characteristic of said vehicle.

5. A verification method according to anyone of claims 1 to 4, **characterized in that** said step (D11) of making available said at least a portion of specific data is a step of displaying said specific data on a screen (420) of said inspection device (400).

6. A verification method according to claim 4 or 5, **characterized in that** said characteristic is a visible mark that can be seen on the outside of said vehicle (1).

7. A verification method according to claim 6, **characterized in that** said characteristic is a number etched on an element of said vehicle.

8. An inspection device (400) suitable for use in verifying the validity of an electronic parking ticket issued by a ticket machine (100) and including parking data (HFS, ZS, P) and being stored in a memory of an electronic entity (200) placed in a vehicle (1) and comprising:

- wireless communication means (410) complying with the NFC standard for securely obtaining, from said electronic entity (200), said electronic ticket (T) and a signature (S) of said electronic ticket (T), said signature (S) being calculated (A3) by cryptographic means (120) of said ticket machine (100) by incorporating therein said electronic ticket (T) and a digital certificate ($Cert_{KTpub}$) that associates a public key (KTpub) of said electronic entity (200) with said specific data (ID)
- means for verifying the validity of said signature (S)
- means for obtaining said certificate ($Cert_{KTpub}$) from said electronic entity (200)
- means for securely obtaining data (ID) specific to said vehicle (1) consisting in verifying the validity of said certificate ($Cert_{KTpub}$) and if it is valid, in extracting therefrom the data (ID) specific to said vehicle (1); and
- means (420) for making available at least a portion of said specific data (ID);

9. An inspection device according to claim 8, **characterized in that** the wireless communication means (410) are very short range communication means, for example with a range of less than 60 cm, for example less than 30 cm, for example about 10 to 15 cm.

EP 2 306 358 B1

T

| HFS | ZS | P |

**FIG. 1**

200

300

B1 · TX Cert$_{KTpub}$ - - - → RX Cert$_{KTpub}$ · C1

Fin

Fin

**FIG. 3**

200

300

100

C2 · DETECT 100

C3 · TX Cert$_{KTpub}$ - - - → RX Cert$_{KTpub}$ · A1

ISSUE T · A2

$S = Sig_{KBpriv}(H(T, Cert_{KTpub}))$ · A3

C4 · RX C=T||S ← - - - TX C=T||S · A4

C5 · RX Cert$_{KBpub}$ ← - - - TX Cert$_{KBpub}$ · A5

C6 · DETECT 200

B2 · RX C=T||S ← - - - TX C=T||S · C7

B3 · RX Cert$_{KBpub}$ ← - - - TX Cert$_{KBpub}$ · C8

**FIG. 4**

11

100

105

110

120

KBpriv 130

300

320

310

T || S

**FIG. 2A**

300

320

310

T || S

200

2

1

**FIG. 2B**

400

420

410

200

2

1

T || S || R

**FIG. 2C**

FIG. 5

**FIG. 6**

**FIG. 7**

**FIG. 8**

**EP 2 306 358 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004055736 A
- WO 0248975 A
- US 6690794 B
- EP 1069538 A